# DEMANDE DE BREVET EUROPEEN

(11) **EP 0 899 984 A1**
(43) Date de publication de la demande: **03.03.1999**
(21) Numéro de dépôt: 98402069.3
(22) Date de dépôt: 17.08.1998
(51) Int. Cl.: H04Q 11/04, H04L 12/403

(54) **Procédé d'exploitation d'un lien de transmission numérique partagé temporellement par plusieurs unités et unité pour la mise en oeuvre d'un tel procédé**

(30) Priorité: 25.08.1997 FR 9710603
(71) Demandeur: ALCATEL, 75008 Paris (FR)
(72) Inventeur: Thomas, Gérard, 95610 Eragny Sur Oise (FR); Humen, Florence, 95100 Argenteuil (FR); Lecomte, Daniel, 75116 Paris (FR); Brignol, Luc, 75011 Paris (FR)
(74) Mandataire: Smith, Bradford Lee

(57) **Abrégé**

Procédé d'exploitation d'un lien (2) de transmission d'informations, se présentant sous forme numérique, partagé temporellement entre une pluralité d'unités (1A, 1B, 1C, 1D, 1E, 1N) sous la supervision de l'une d'entre elles dite de régie. Cette dernière communique avec les autres par l'intermédiaire de cellules individuellement adressées de signalisation qui lui permettent d'interroger régulièrement chaque unité, relativement à son état présent et à ses besoins en matière de communication par le lien, et de lui préciser au moins un créneau de temps déterminé de trame pour une réponse et pour autres ses émissions par cellules. L'invention concerne aussi les unités permettant la mise en oeuvre d'un tel procédé.

## Description

L'invention concerne un procédé d'exploitation d'un lien de transmission numérique, de type bus filaire ou radio, partagé temporellement par plusieurs unités sous le contrôle de l'une d'entre elles pour des échanges de signaux de communication. Elle concerne aussi les unités équipées pour la mise en oeuvre d'un tel procédé.

D'une manière générale, l'exploitation d'un lien de transmission par plusieurs unités pour des échanges de signaux de communication implique un partage de la capacité de transmission autorisée par l'intermédiaire du lien tel que chacune des unités puisse disposer de possibilités de communication qui optimalement correspondent à ses besoins.

Dans le cas d'un lien exploité en partage de temps, ceci conduit à ce que chaque unité productrice de signaux de communication puisse temporairement disposer du lien pour émettre et une structure matérielle et/ou logicielle de répartition des temps d'émission aux unités doit donc être prévue. Une telle structure implique pratiquement une génération de signaux d'horloge pour régir les émissions des unités et il est intéressant de prévoir une production, par exemple périodique, de signaux de synchronisation pour faciliter le partage de la liaison par les unités.

Il est connu de prévoir une organisation temporellement tramée d'exploitation d'un lien impliquant une production périodique de signaux de synchronisation à partir desquels les unités sont aptes à se caler pour émettre et recevoir des données à des instants déterminés par la structure de répartition par rapport aux signaux de synchronisation et aux signaux d'horloge. Les instants affectés à une unité pour une émission sont susceptibles d'être prévus répartis dans le temps au cours de trames temporelles successives au cours de chacune desquelles l'unité se voir réserver un même nombre d'instants successifs, par exemple huit, définissant un module, les modules exploités par une unité pour émission étant temporellement disposés de manière identique dans les trames successives qui les comportent. Une telle organisation permet une transmission synchrone de signaux de communication et en particulier de signaux de parole codés selon la technique MIC ou de données par l'intermédiaire d'un ou de plusieurs canaux de transmission correspondants chacun à un ou plusieurs modules identiquement disposé(s) au cours des trames successives. Elle est plus spécifiquement adaptée à la transmission d'informations parvenant d'unités à débits respectifs réguliers ou dont les débits respectifs sont susceptibles d'être régularisés par un stockage temporaire avant transmission, lorsque le lien ne permet pas une transmission en temps réel avec un débit suffisant.

Il est donc peu aisé d'exploiter de telles liaisons pour des débits fortement variables, sauf si les débits prévus pour ces liaisons sont choisis suffisamment élevés pour accepter les pointes, ce qui n'est pas nécessairement acceptable sur le plan économique.

Pour différentes raisons, il n'y a pas nécessairement une bonne adéquation entre les besoins des unités et les moyens dont elles obtiennent la mise en disposition en matière de débit au cours du temps.

Dans une autre forme connue d'organisation, les instants affectés à une unité pour une émission sont susceptibles d'être prévus successifs, généralement avec au moins une limitation du nombre d'instants successifs susceptibles d'être attribués à une même unité, pour une transmission par paquets de données numériques ou de signaux numérisés. La limitation du nombre d'instants successifs attribués d'affilée à une même unité, comme dans le cas des paquets de type cellule, peut notamment permettre de transmettre dans des conditions déterminées et en mode asynchrone des signaux prévus pour être transmis en mode synchrone, tels que des échantillons MIC relatifs à une communication téléphonique. Il est aussi possible de transmettre des informations parvenant temporairement avec un débit élevé, puisque le nombre d'instants successifs susceptibles d'être obtenus par une unité pour une émission est beaucoup plus grand que celui prévu avec l'organisation évoquée plus haut et que l'écoulement d'informations pour cette unité peut reprendre d'autant plus rapidement que le nombre d'unités désireuses d'émettre sur le lien de transmission est faible et que leurs besoins respectifs en matière de débit sont faibles. Toutefois, ici encore il n'y a pas nécessairement une bonne adéquation entre les besoins des unités et les moyens dont elles obtiennent la mise en disposition en matière de débit au cours du temps. Dans ce cas présent, ceci est notamment une conséquence du fait que l'organisation qui régit une liaison exploitée en mode paquet ou cellule, ne fait que prendre en compte les demandes effectuées par les unités désireuses d'émettre, sans connaître réellement la nature des besoins que traduisent ces demandes. Or au moins dans un certain nombre de cas et par exemple dans le cas d'unités susceptibles d'être exploitées en tant que terminaux multimédia, les variations de débit et de conditions d'exploitation d'une même unité peuvent varier grandement suivant l'utilisation qui en est faite.

L'invention propose donc un procédé d'exploitation d'un lien de transmission d'informations se présentant sous forme numérique partagé temporellement entre une pluralité d'unités sous la supervision de l'une d'entre elles, ici dite de régie, assurant des fonctions d'arbitre et/ou de gestionnaire et régissant les transmissions réalisées par cellules entre unités dans le cadre de trames définies par l'intermédiaire de signaux d'horloge et de synchronisation qu'exploitent les unités.

Selon une caractéristique de l'invention, le procédé prévoit que l'unité de régie communique avec les autres unités par l'intermédiaire de cellules individuellement adressées de signalisation permettant d'interroger régulièrement par requête chacune desdites autres unités relativement à son état présent et à ses besoins en matière de communication au moyen du lien, en lui précisant au moins un créneau de temps déterminé de trame d'une part pour sa réponse à la requête reçue d'autre part pour ses émissions et que chaque unité ayant reçu une cellule de signalisation contenant une requête en provenance de l'unité de régie réponde par émission d'une cellule de signalisation en réponse dans le créneau de temps d'une trame tel que défini par ladite unité de régie pour préciser son état et ses besoins.

L'invention propose aussi une unité pour ensemble d'unités partageant temporellement un lien de transmission d'informations se présentant sous forme numérique sous la supervision de l'une d'entre elles, dite de régie, assurant des fonctions d'arbitre et/ou de gestionnaire et régissant les transmissions réalisées par cellules entre unités dans le cadre de trames définies par l'intermédiaire de signaux d'horloge et de synchronisation qu'exploitent les unités, caractérisé en ce qu'elle comporte des moyens matériels et logiciels pour mettre en oeuvre le procédé résumé ci-dessus.

L'invention, ses caractéristiques et ses avantages sont précisés dans la description qui suit en liaison avec les figures évoquées ci-dessous.

La figure 1 présente un schéma de principe relatif à un système comportant un ensemble d'unités et un lien de transmission commun.

La figure 2 présente un schéma de principe montrant les éléments essentiels comportés par les unités.

La figure 3 est un diagramme de répartition de cellules relatif à un lien de transmission de type filaire.

La figure 4 est un diagramme de répartition de cellules relatif à un lien de transmission de type radio ayant une unité de régie faisant fonction de répéteur.

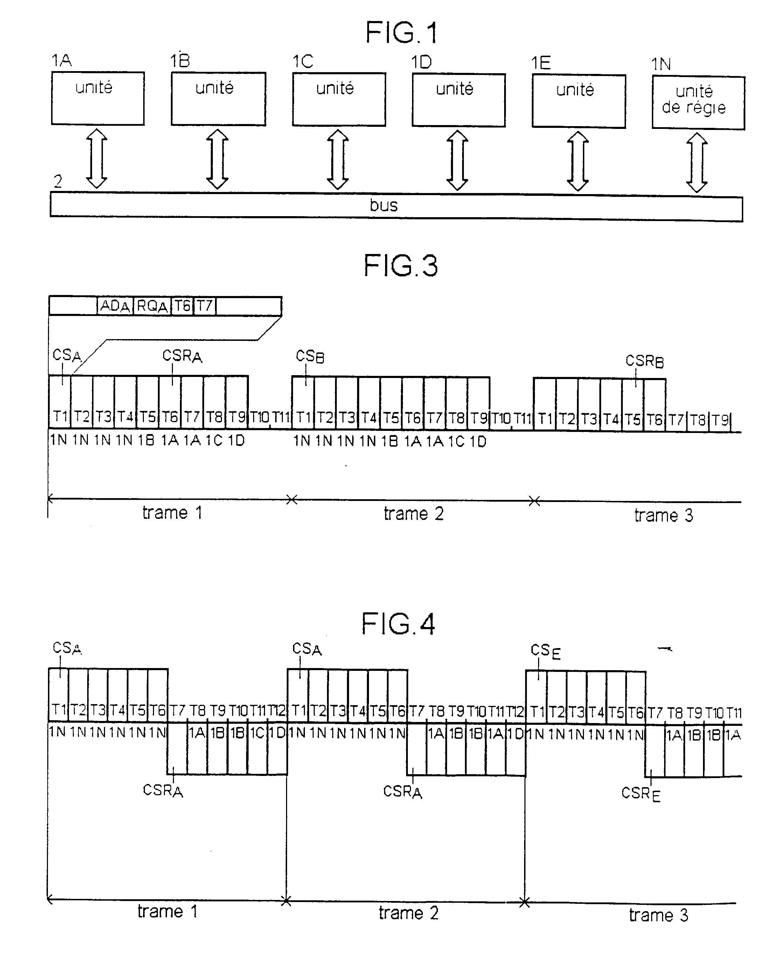

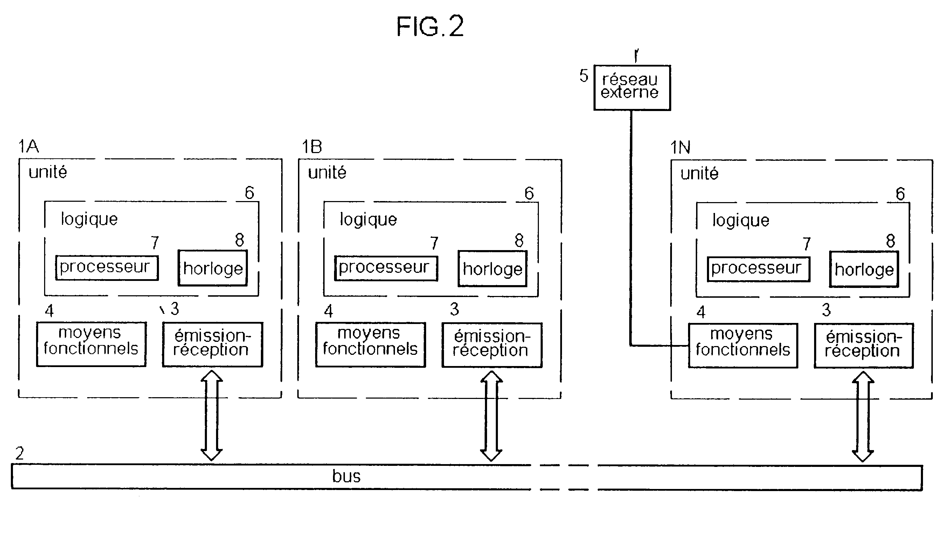

Le système présenté en figure 1 comporte un ensemble regroupant une pluralité d'unités, telles les unités 1A, 1B, 1C, 1D, 1E, ..., 1N équipées pour partager un lien de transmission commun 2, exploité en bus. Comme indiqué plus haut, ce lien de transmission 2 est susceptible d'être un bus de transmission filaire de type électrique ou éventuellement optique ou encore un bus, dit logique, assurant une transmission des signaux entre unités par voie hertzienne.

Les unités d'un tel ensemble sont succinctement définies en liaison avec la figure 2, elles sont susceptibles d'avoir des fonctions très diverses et notamment des fonctions de génération, de restitution et/ou de transmission d'informations sous différentes formes, par exemple pour desservir des terminaux multimédia. Ces unités ont pour caractéristique commune de disposer de moyens d'émission-réception 3 destinés à leur permettre de communiquer par l'intermédiaire du lien de transmission 2 avec les autres unités de l'ensemble que ce lien permet de desservir. Ces moyens d'émission-réception 3 sont ou comportent une interface d'entrée-sortie pour bus filaire, si tel est le lien de transmission 2, ils sont ou comportent un équipement émetteur-récepteur radio, si la liaison entre unités de l'ensemble 1 s'effectue par voie radio.

Les moyens d'émission-réception 3 d'une unité de l'ensemble 1 sont reliés à des moyens, dits fonctionnels 4, correspondants à au moins une fonction impartie à cette unité, par exemple des moyens faisant office d'interface de communication dans le cas d'une unité, telle 1N, destinée à permettre une mise en communication d'au moins une des unités de l'ensemble; avec une ou des unités n'appartenant pas à l'ensemble d'unités 1 par l'intermédiaire d'un réseau externe de télécommunications 5.

Chacune des unités de l'ensemble d'unités 1 est régie par une logique 6 organisée autour d'au moins un processeur 7 et d'un agencement d'horloge 8. Dans la réalisation envisagée, une des unités de l'ensemble 1, par exemple l'unité 1A ou éventuellement l'unité 1N, est organisée pour agir en arbitre ou en gestionnaire, vis-à-vis des autres unités en matière d'exploitation du lien de transmission 2 que ces unités, soient ici 1A, 1B, ..., 1N, partagent et en conséquence pour régir l'ensemble formé par le lien et par les unités. Cette unité de régie exploite les signaux d'horloge et de synchronisation produits pour les transmissions par l'intermédiaire du lien de transmission 2 par un agencement d'horloge qui est par exemple l'agencement d'horloge 8 de ladite unité de régie dûment composé comme connu de l'homme de métier.

Dans l'exemple de réalisation envisagé, cet agencement d'horloge est exploité pour produire les signaux d'horloge de transmission et de synchronisation qui permettent de définir la trame temporelle de transmission en vigueur sur le lien de transmission et sur lesquelles toutes les unités se synchronisent de manière connue en soi quel que soit le type filaire ou radio du lien. Dans le cas d'une unité de régie 1N reliée à un réseau de télécommunications public, c'est préférablement l'horloge de ce dernier qui est prise en compte en tant que référence par l'agencement d'horloge 8 de cette unité de régie pour exploitation au niveau du lien de transmission 2.

Les signaux de synchronisation de trame qui sont émis par l'unité de régie sont ici fournis dans le cadre de cellules ATM qui permettent aux agencements d'horloge des autres unités de l'ensemble 1 de se synchroniser par rapport à l'unité de régie en vue de recevoir et/ou d'émettre via le lien de transmission 2. La logique 6 de l'unité de régie comporte un processeur 7 qui est programmé de manière à pouvoir adresser chacune des autres unités par l'intermédiaire de cellules de signalisation que cette unité de régie émet. Ceci est destiné à permettre à l'unité de régie de connaître l'état et les besoins de chacune des autres unités dans un délai susceptible de correspondre au temps réel, si besoin est. Une phase de configuration initiale permet à l'unité de régie d'être renseignée sur la nature et les besoins respectifs de chacune des autres unités reliées au même lien de transmission 2 qu'elle. Cette phase de renseignement est susceptible d'être réalisée en ligne par échange entre l'unité de régie et chacune des unités de l'ensemble d'unités 1 qui sont desservies par le lien de transmission 2, elle permet notamment de connaître le ou les modes de transmission synchrone et/ou asynchrone qu'est susceptible de requérir une unité pour une communication ou phase de communication déterminée, ainsi que le ou les débits envisagés à cette occasion.

L'obtention de ces renseignements et leur maintien à jour est susceptible d'être réalisée par l'unité de régie qui émet à cet effet des cellules de signalisation CS, telle CS_{A} ou CS_{B} sur la figure 3, à destination des unités avec lesquelles elle veut communiquer.

Les unités desservies par le lien de transmission 2 sont affectées d'adresses individuelles AD, telles AD_{A}, AD_{B}, AD_{N}, qui permettent notamment à l'unité de régie d'individualiser les cellules de signalisation qu'elle émet et en conséquence à formuler des requêtes RQ, telle RQ_{A}, adaptées de manière spécifique en fonction du type d'une unité et des renseignements obtenus, notamment suite à au moins une requête précédente, relativement à l'état connu et aux besoins prévisibles de cette unité. Le rythme d'envoi des cellules de signalisation par l'unité de régie aux autres unités est prévu spécifiquement adapté aux besoins de cette unité tels que déductibles des renseignements reçus et alors stockés par la logique de ladite unité de régie, une unité émettant régulièrement avec un débit régulier n'impliquant pas la même surveillance qu'une unité sujette à des variations importantes et soudaines de débit.

Dans la réalisation envisagée, il est prévu que l'unité de régie indique, au moins une fois dans une cellule de signalisation destinée à une unité, la position temporelle T du ou des créneaux de temps prévus, tels par exemple T6 et T7 pour l'unité 1A, pour les émissions de cellules par cette unité au cours d'au moins une des trames de transmission par l'intermédiaire du lien de transmission 2. Ceci concerne tant les émissions de cellules de signalisation en réponse émises par chaque unité sur requête de l'unité de régie comme déclenchée par la réception d'une cellule de signalisation adressée à ladite unité par cette unité de régie, que les cellules, ici dites de communication d'information, émises par une unité pour les besoins d'une application qu'elle sert.

L'incorporation, dans une cellule de signalisation par l'unité de régie et pour une autre unité, des indications relatives au(x) créneau(x) de temps temporairement réservé(s) à cette autre unité pour des émissions de cellule permet à l'unité de régie de répartir entre les unités les possibilités de débit offertes par le lien de transmission au mieux des besoins connus pour ces unités à un instant donné. Il est ainsi possible de modifier par envoi de cellules de signalisation appropriées, les attributions de créneaux de temps aux unités pour attribuer, par exemple à une unité pour lequel un débit élevé est temporairement requis, des créneaux de temps jusqu'alors attribués à une ou plusieurs autres unités dont les besoins sont moindres ou moins immédiats.

Ceci implique dans la réalisation envisagée que les unités répondent impérativement aux requêtes que contiennent les cellules de signalisation qui leur sont individuellement adressées. A cet effet, il est ici prévu que l'unité de régie qui a émis une cellule comportant une requête en direction d'une autre unité attende la réponse de cette dernière. Cette réponse est attendue dans le créneau de temps fixé par l'unité de régie, ce créneau ayant ici été supposé indiqué par l'unité de régie dans la cellule de signalisation comportant la requête considérée. Cette réponse est susceptible de survenir dans la même trame que la cellule de requête de l'unité de régie qui l'a occasionnée, si l'unité est une unité dotée de moyens lui permettant une réponse rapide et si en particulier les renseignements à fournir sont immédiatement disponibles, comme cela est par exemple possible avec une unité à fort débit disposant de moyens choisis pour leurs performances. Telle est supposée la réponse incluse dans la cellule CSR_{A} émise dans le créneau T6 imparti à l'unité 1A qui est émise suite à la requête figurant dans la cellule CS_{A} émise par l'unité de régie 1N au cours de la trame 1, comme symbolisé sur la figure 3. Les trames 1, 2 et 3 représentées ici sont à considérer comme n'étant pas nécessairement immédiatement successives.

Il est aussi possible que cette réponse parvienne dans le créneau de temps de trame indiqué au cours d'une trame ultérieure proche, si les conditions évoquées ci-dessus ne sont que partiellement remplies, par exemple pour des raisons matérielles. Telle est supposée la réponse CSR_{B} émise par l'unité 1B dans le créneau de temps T4 de la trame 3 suite à la requête formulée par l'unité de régie 1N dans la cellule CS_{B} émise au cours du créneau de temps T1 de la trame 2.

Un seuil maximal de temps d'attente est susceptible d'être fixé, si nécessaire, pour permettre à l'unité de régie d'envoyer une nouvelle requête à une unité autre que celle dont une réponse est attendue, si cette réponse tarde d'une manière qui traduit un dysfonctionnement.

Comme indiqué plus haut, la réception par l'unité de régie des renseignements relatifs à l'état et aux besoins des autres unités qu'elle obtient de ces dernières suite à ses requêtes et la prise en compte de ces renseignements avec d'autres acquis précédemment et notamment en phase de configuration, permettent une répartition des créneaux de temps qui permettent la transmission des cellules par le lien de transmission 2 au cours des trames temporelles successives. Cette répartition s'effectue dans des conditions déterminées par programmation, selon des techniques bien connues de l'homme de métier, cette programmation étant ici supposée mise en oeuvre au niveau de la logique de l'unité de régie, en liaison avec les logiques des autres unités.

L'émission de cellules par une unité vers une autre dans le cadre d'une communication entre ces unités est toujours effectuée sous le contrôle de l'unité de régie. Celle-ci se charge, comme énoncé ci-dessus, de définir les créneaux de temps d'émission alors impartis à au moins l'une de ces deux unités pour cette communication. Il est entendu que cette répartition est susceptible d'évoluer en cours de communication, si les besoins en matière de communication par l'intermédiaire du lien de transmission 2 exploité conduisent l'unité de régie à en décider ainsi. Dans l'exemple présenté en figure 3, il a été supposé que les créneaux de temps T1 à T4 de la trame 1 ont été réservés aux émissions de l'unité de régie, soit en l'occurrence de l'unité 1N, que les créneaux de temps T6 et T7 sont réservés aux émissions de l'unité 1A, que les créneaux de temps T5, T8 et T9 sont attribués aux émissions respectives de l'unité 1B,de l'unité 1C et de l'unité 1D, les créneaux de temps T10 et T11 n'étant alors pas réservés.

Une unité qui est appelante, signale son état appelant et ses besoins à l'unité de régie, dans une cellule de signalisation en réponse adressée à cette unité de régie, lors d'une réponse à une requête adressée dans le cadre des cellules de signalisation émises de manière régulière, par exemple cyclique ou quasi-cyclique, par ladite unité de régie à destination de cette unité alors appelante. Ces besoins se définissent notamment par une adresse d'unité à appeler, des indications sur la nature synchrone ou asynchrone de la transmission à réaliser, du débit, du type de codage, etc. L'unité appelée est susceptible d'être l'unité de régie elle-même, en particulier si cette unité de régie est une unité assurant une interface avec un réseau de communication externe, comme indiqué pour l'unité 1N supposée reliée à un réseau externe de communication 5.

Suivant différentes conditions et en particulier en fonction des natures respectives des unités que ce soit appelante ou appelée, les demandes de l'unité appelante en matière de débit peuvent être soit directement déductibles par l'unité de régie à partir de l'adresse de l'unité appelée ou de celle de l'unité appelante, soit impliquer la fourniture de renseignements complémentaires par l'unité appelante et/ou par l'unité appelée dans le cadre des cellules de signalisation en réponse que l'une et l'autre de ces deux unités sont amenées à envoyer à l'unité de régie, si aucune d'elles n'est cette unité de régie.

L'unité appelante est susceptible d'indiquer par exemple qu'elle requiert, ou souhaite, un débit minimum déterminé en particulier si celui-ci est élevé. Ce renseignement est ici supposé transmis dans une première cellule de signalisation en réponse transmise par l'unité appelante à l'unité de régie suite à une requête produite par cette dernière dans une cellule de signalisation en réponse qui suit l'apparition de la demande d'appel au niveau de ladite unité appelante. Ce renseignement est pris en compte au niveau de l'unité de régie qui est susceptible de le confronter à celui qui sera fourni par l'unité appelée, si besoin est. Ceci intervient par exemple si le débit admis par l'unité appelée est susceptible de différer de celui demandé par l'unité appelante.

L'unité de régie décide alors, en fonction des informations dont elle dispose relativement aux besoins et aux possibilités en matière d'exploitation du lien de transmission 2, quels sont les créneaux de temps qui seront réservés aux émissions de l'une et/ou l'autre des deux unités impliquées dans la communication demandée. La décision précise par l'unité de régie ne reste valable que tant qu'aucune demande d'une des unités desservies par le lien de transmission 2, n'implique une modification de la répartition des créneaux de temps aux diverses unités alors en communication et ce à quel que stade de communication que ce soit.

En réception, chaque unité récupère classiquement les cellules transmises par le lien de transmission qui comporte dans leurs en-têtes respectifs l'adresse individuelle qui lui correspond ou éventuellement une adresse de groupe lorsque ladite unité partage une telle adresse avec d'autres unités de l'ensemble qui les comporte, comme classique en la matière.

Selon une variante de réalisation, l'unité de régie est susceptible d'indiquer dans les cellules de signalisation qu'elle envoie à une unité les créneaux de temps où sont transmises les cellules qui sont à prendre en compte par cette unité et en particulier les cellules de communication d'information évoquées plus haut.

S'il peut être avantageux d'affecter des créneaux de temps successifs aux unités dont les émissions de cellules impliquent l'usage de plus d'un créneau de temps lorsqu'un lien de transmission 2 comporte deux voies physiques de transmission comme cela est courant avec des liens de type filaire, ceci devient une solution préférentielle lorsque le lien de transmission 2 transmet toujours d'une unité vers une ou plusieurs autres sans permettre aucune autre transmission en simultané. Tel est le cas des liens de transmission monovoie fonctionnant à l'alternat et en particulier des liens de transmission radio ne comportant qu'une voie radio successivement exploitée par chaque unité d'une part pour ses émissions et d'autre part pour ses réceptions.

Usuellement, une unité de régie en charge de la liaison fonctionnant en répéteur, est équipée de moyens d'émission lui donnant une portée supérieure à celle des autres stations. Ainsi, on a récupéré dans de bonnes conditions toutes les émissions provenant des autres unités moins équipées en puissance, par exemple pour des raisons économiques. En conséquence, on réémet les émissions desdites autres stations dans des conditions plus satisfaisantes pour les unités prévues destinataires.

Dans cette configuration, cette unité de régie peut être considérée comme étant de type serveur. Elle introduit un effet de tampon entre les autres unités, puisque les émissions de celles-ci sont récupérées par les moyens de réception de l'unité de régie avant d'être réémises par cette dernière. Les cellules émises par les unités autres que l'unité de régie qui comportent classiquement dans leurs en-têtes respectives la ou les adresses des unités auxquelles elles sont destinées, sont alors retransmises par l'unité de régie vers les unités destinataires.

Les cellules émises par les unités et retransmises par l'intermédiaire de l'unité de régie sont préférablement maintenues inchangées. Les renseignements nécessaires à leur bon acheminement sont transférés par l'intermédiaire des cellules de signalisation en réponse que les unités émettent vers l'unité de régie dans des conditions établies par cette dernière et suite aux requêtes que celle-ci transmet par l'intermédiaire des cellules de signalisation qu'elle envoie.

Dans des conditions analogues à celles déjà indiquées plus haut, l'unité de régie a, dans une forme préférée de réalisation, la possibilité d'indiquer aux unités destinataires la position temporelle des créneaux de temps au cours desquels sont transmises les cellules qui leurs sont respectivement destinées.

Comme indiqué plus haut et dans la mesure où les moyens d'émission-réception des unités sont amenés à alternativement basculer d'un état d'émission à un état de réception, il est prévu de ménager un intervalle de temps de garde, par exemple un créneau de temps au moins entre les émissions de l'unité de régie et celles des autres unités et/ou inversement. Il est aussi prévu une durée de créneau de temps qui soit un peu supérieure à la durée nécessaire à l'émission d'une cellule pour tenir compte des éventuelles disparités entre unités.

La figure 4 montre un exemple, non limitatif, de répartition des créneaux de temps entre des unités exploitant un lien de type radio fonctionnant à l'alternat dans lequel trois trames référencées 1, 2 et 3 sont représentées.

Dans la mesure où l'ensemble d'unités exploitant le lien dispose d'un nombre déterminé de créneaux de temps, ici référencés de T1 à T12, à chaque trame et où les besoins des unités en matière de débit sont définis, il est prévu une répartition initiale dont un exemple est montré en relation avec la trame 1. ll est ici prévu qu'au moins certaines des unités puissent avoir des besoins en matière de débit qui ne soient pas toujours identiques et qui les conduisent par exemple à vouloir émettre plusieurs cellules successives au cours d'une même trame si la répartition des créneaux alors en vigueur par trame le permet. Il est aussi envisagé que, comme classiquement en matière de télécommunications, les besoins des unités ne puissent être simultanément satisfaits en totalité. Une telle hypothèse est acceptable à partir du moment où l'exploitation envisagée n'implique pas une émission permanente de toutes les unités à débit maximal pour chacune d'elles.

Dans le cas de la trame 1 proposée en figure 4, il est supposé que les créneaux de temps soient répartis en deux groupes de taille potentiellement variable, l'un étant propre à l'unité de régie pour ses besoins et pour la réémission des cellules de communication d'information destinées aux autres unités, l'autre groupe étant partagé par les unités émettrices de cellules qui sont autres que l'unité de régie.

Dans l'exemple proposé le créneau de temps T1 de la trame 1 est supposé réservé à une des cellules de signalisation CS émises par l'unité de régie, par exemple une cellule CS_{A} destinée à l'unité 1A. Les créneaux de temps T2 à T6 sont ici supposés initialement et respectivement réservés à des cellules de communication d'information réémises par l'unité de régie après avoir été initialement émises par les autres unités. Dans l'exemple présenté, le créneau de temps T2 de la trame 1 est affecté à la réémission par l'unité de régie d'une cellule provenant de l'unité 1A, les créneaux de temps T3 et T4 aux réémissions par l'unité de régie de cellules provenant de l'unité 1B, le créneau de temps T5 à celle d'une cellule provenant de l'unité 1C et le créneau T6 à celle d'une cellule provenant de l'unité 1D. Le créneau de temps T7 est prévu pour l'émission par une des dites autres unités qui est ici l'unité 1A, d'une cellule de signalisation en réponse référencée CSR_{A}, émise par l'unité A pour répondre à la demande de l'unité de régie contenue dans la cellule CS_{A} émise dans le créneau T1. Ce créneau est figuré en position inversée sur la figure 4 pour symboliser le passage en émission des modems que contiennent les dites autres unités, à partir de la position de réception qu'avaient alors ces modems.

Un temps de garde non représenté est prévu pour tenir compte de ce retournement. De plus dans la mesure où les temps de propagation et de réponse pour les unités ne sont pas complètement identiques, il est prévu des marges temporelles, non représentées, permettant notamment de s'assurer que les cellules émises par les dites autres unités vers l'unité de régie puissent être intégralement prises en compte par cette dernière. Ceci conduit par exemple à ce que les nombres de temps d'horloge pris en considération soient différents en réception pour une cellule d'unité de régie et pour une cellule d'une autre unité, ce nombre étant moindre pour les cellules provenant de l'unité de régie.

Les créneaux de temps T8 à T12 de la trame 1 sont supposés ici avoir été attribués aux unités 1A, 1B, 1C, 1D dans les mêmes conditions que pour les créneaux de temps T2 à T6, c'est à dire le créneau T8 pour l'unité 1A, les créneaux T9 et T10 pour l'unité 1B et ainsi de suite. Il doit être compris que cela n'implique pas nécessairement que ces unités exploitent les créneaux qui leur sont initialement impartis, ceci étant développé ultérieurement.

Il a été supposé à titre d'exemple que le créneau T7 de la trame 1 a été exploité par l'unité 1A pour émettre une demande de créneau de temps supplémentaire en émission dans une cellule de signalisation en réponse vers l'unité de régie. Cette dernière cherche alors un créneau de temps inutilisé par l'unité à laquelle ce créneau est alors attribué et dans l'exemple présent ce créneau est supposé être le créneau T11 attribué jusqu'alors à l'unité 1C. Une nouvelle cellule de signalisation CS_{A} est alors envoyée par l'unité de régie à l'unité 1A pour lui indiquer la position du créneau de temps supplémentaire, soit ici T11, qui lui est attribué, cette nouvelle cellule de signalisation est ici supposée être émise au cours du créneau de temps T1 de la trame 2. Les affectations des créneaux de temps T2 à T4 et T6 de la trame 2 sont identiques à celles des créneaux correspondants de la trame 1, seul étant réaffecté à l'unité 1A, le créneau T5 initialement affecté à la réémission d'une cellule émanant de l'unité 1C.

L'unité 1A est supposée réemettre une cellule de signalisation en réponse CSR_{A} ayant une fonction d'accusé de réception dans le créneau de temps T7 qui lui a été à nouveau affecté à cet effet par l'unité de régie. Les créneaux de temps T8 à T10 et T12 de la trame 2 sont supposés conserver les mêmes affectations que les créneaux correspondants de la trame 1, le créneau T11 est alors exploité par l'unité 1A pour émettre une seconde cellule en cours de trame 2, la première ayant été émise au cours du créneau de temps T8, comme déjà indiqué.

Dans le cas de la trame 3, le créneau de temps T1 est supposé exploité par l'unité de régie pour envoyer une cellule de signalisation CS_{E} à l'unité 1E alors non émettrice pour vérifier que cette unité n'a pas de besoin en attente. Les créneaux de temps T2 à T6 et T8 à T12 sont supposés avoir même attribution que précédemment. L'unité 1E émet une cellule de signalisation en réponse CSR_{E}, requise par l'unité de régie, dans le créneau de temps T7 qui lui a été indiqué par cette unité de régie pour cette réponse.

Il est bien entendu possible de modifier les répartitions de créneaux de temps aux unités, par le procédé d'attribution évoqué ci-dessus, de manière que les deux cellules émises par une même unité soient émises et/ou réémises au cours de créneaux de temps successifs dans chaque trame.

Il doit être compris qu'il est aussi possible d'obtenir une limitation du débit d'une unité, alors considérée comme secondaire, au profit d'une unité prioritaire en réduisant voire annulant temporairement le nombre de canaux qui sont attribués à cette unité considérée comme secondaire d'une manière temporaire, éventuellement périodique.

Il doit aussi être compris qu'il est possible de modifier le nombre de créneaux de temps réservés aux émissions de l'unité de régie et des autres unités de différentes manières par l'intermédiaire du procédé selon l'invention. En particulier il est éventuellement possible de modifier la position des temps de basculement qui dans l'exemple proposé correspondent aux fins des créneaux de temps T6 et T12. Ceci peut notamment permettre d'augmenter le débit pour au moins une unité dans le cas où le nombre réduit d'unités réellement émettrices dans une période donnée le permet. Dans un exemple non représenté, il est par exemple supposé que la répartition des créneaux de temps aux unités peut être réalisée de manière que les temps de basculement soient séparés par seulement quatre créneaux de temps au lieu de six précédemment, ce qui peut permettre d'utiliser tous les créneaux de temps pour les unités alors émettrices.

## Revendications

1. Procédé d'exploitation d'un lien (2) de transmission d'informations, sous forme numérique, partagé temporellement entre une pluralité d'unités (1A, 1B, 1C, 1D, 1E, 1N) sous la supervision de l'une d'entre elles (1N), ici dite de régie, assurant des fonctions d'arbitre et/ou de gestionnaire et régissant les transmissions réalisées par cellules entre unités dans le cadre de trames définies par l'intermédiaire de signaux d'horloge et de synchronisation qu'exploitent les unités, ledit procédé étant caractérisé en ce qu'il prévoit que l'unité de régie communique avec les autres unités par l'intermédiaire de cellules individuellement adressées de signalisation permettant d'interroger régulièrement par requête chacune desdites autres unités relativement à son état présent et à ses besoins en matière de communication au moyen du lien, en lui précisant au moins un créneau de temps déterminé de trame d'une part pour sa réponse à la requête reçue d'autre part pour ses émissions et que chaque unité ayant reçu une cellule de signalisation contenant une requête en provenance de l'unité de régie réponde par émission d'une cellule de signalisation en réponse dans le créneau de temps d'une trame tel que défini par ladite unité de régie pour préciser son état et ses besoins.

2. Procédé, selon la revendication 1, caractérisé en ce qu'il prévoit que l'unité de régie précise par cellule de signalisation à chaque unité en phase de communication la position des créneaux de temps de trame qui lui sont alors temporairement affectés pour émettre des cellules.

3. Procédé, selon la revendication 2, caractérisé en ce qu'il prévoit une modification d'attribution du ou des créneaux de temps de trame temporairement affectés à une unité alors émettrice, en cas de modification des besoins de cette unité et/ou d'au moins une des autres unités alors émettrices, lorsqu'au moins une desdites unités alors émettrices profite d'un réarrangement des attributions de créneaux de temps existantes conduisant à modifier le ou les créneau(x) de temps de trame affecté(s) à l'unité émettrice initialement considérée ci-dessus.

4. Procédé, selon l'une des revendications 1 à 3, caractérisé en ce qu'il prévoit que l'unité de régie transmette par cellule de signalisation, à toute unité réceptrice d'informations fournies par une autre unité, l'indication du ou des créneau(x) de temps de trame exploités par cette autre unité pour ses émissions de cellules dites de communication d'informations.

5. Procédé, selon la revendication 1, caractérisé en ce qu'il prévoit des émissions de cellules de signalisation par l'unité de régie vers les autres unités dont la récurrence est déterminée unité par unité en fonction de chacune de ces dernières.

6. Procédé, selon au moins l'une des revendications 1 à 5, caractérisé en ce qu'il prévoit que les besoins en matière de débit en émission et en conséquence en matière de créneaux de temps de trame pour au moins une des unités soient stockés dans l'unité de régie en liaison avec l'adresse attribuée à ladite unité.

7. Procédé, selon au moins l'une des revendications 1 à 6, caractérisé en ce qu'il prévoit que les besoins se révélant en matière de débit en émission et en conséquence en matière de créneaux de temps de trame au niveau d'une des unités au moins soient transmis par l'intermédiaire de la cellule de signalisation que cette unité émet en réponse à la requête qu'elle reçoit dans le cadre de la cellule de signalisation émise par l'unité de régie, après que lesdits besoins aient été constatés par cette unité au niveau duquel ils se révèlent.

8. Procédé, selon au moins l'une des revendications 1 à 7, caractérisé en ce qu'il prévoit une transmission à l'alternat par l'intermédiaire du lien de transmission, l'unité de régie émettant ses cellules vers les autres unités dans les créneaux de temps de trame successifs qu'elle s'attribue, les autres unités émettant respectivement leurs cellules dans les créneaux de temps de trame qui leur sont respectivement attribués, de manière préférablement successive pour chaque unité disposant de plus d'un créneau de temps, et qui sont temporellement dissociés des créneaux de temps exploités par l'unité de régie au cours des trames.

9. Unité pour ensemble d'unités partageant temporellement un lien de transmission d'informations se présentant sous forme numérique sous la supervision de l'une d'entre elles, dite de régie, assurant des fonctions d'arbitre et/ou de gestionnaire et régissant les transmissions réalisées par cellules entre unités dans le cadre de trames définies par l'intermédiaire de signaux d'horloge et de synchronisation qu'exploitent les unités, caractérisé en ce qu'elle comporte des moyens matériels et logiciels pour mettre en oeuvre le procédé selon au moins l'une des revendications 1 à 8.
